(19) Europäisches Patentamt
European Patent Office
Office européen des brevets

(11) Veröffentlichungsnummer: **0 129 902**
**B1**

(12) **EUROPÄISCHE PATENTSCHRIFT**

(45) Veröffentlichungstag der Patentschrift: 01.04.87

(51) Int. Cl.⁴: C 08 F 8/14

(21) Anmeldenummer: 84107280.4

(22) Anmeldetag: 25.06.84

**ERRATUM**

| DIE TEXTSTELLE: / TEXT PUBLISHED: / LE PASSAGE SUIVANT: | (SEITE, SPALTE, ZEILE) (PAGE, COLUMN, LINE) (PAGE, COLONNE, LIGNE) | | | LAUTET BERICHTIGT: / SHOULD READ: / DEVRAIT ETRE LU: |
|---|---|---|---|---|
| der technisch erhältlichen Carbonsäurederivate ... | 3 | 4 | 50/51 | der technisch erhältlichen aktivierten Carbonsäurederivate ... |
| insbesondere 4 bis 30 Stunden. | 4 | 6 | 23/24 | insbesondere 4 bis 20 Stunden. |
| Durch Belichtung mit ... | 7 | 12 | 05 | Durch bildmäßige Belichtung mit .. |

Tag der Entscheidung über die Berichtigung / Date of decision on rectification / Date de décision portant sur modification: 08.07.88

Ausgabe- und Veröffentlichungstag / Issue and publication date / Date d'edition et de publication: 05.10.88

Patbl.Nr / EPB no / Bull. no: 88/40

(19) Europäisches Patentamt
European Patent Office
Office européen des brevets

(11) Veröffentlichungsnummer: **0 129 902**
**B1**

# (12) EUROPÄISCHE PATENTSCHRIFT

(45) Veröffentlichungstag der Patentschrift: **01.04.87**

(51) Int. Cl.⁴: **C 08 F 8/14**

(21) Anmeldenummer: **84107280.4**

(22) Anmeldetag: **25.06.84**

(54) **Verfahren zur Acylierung von Polyvinylalkoholen und so acylierte Produkte enthaltende photopolymerisierbare und/oder photovernetzbare Mischungen.**

(30) Priorität: **25.06.83 DE 3322993**

(43) Veröffentlichungstag der Anmeldung: **02.01.85 Patentblatt 85/1**

(45) Bekanntmachung des Hinweises auf die Patenterteilung: **01.04.87 Patentblatt 87/14**

(84) Benannte Vertragsstaaten: **BE DE FR GB IT NL**

(56) Entgegenhaltungen:
**EP - A - 0 079 514**
**DE - A - 2 012 389**
**DE - A - 2 632 398**
**DE - B - 1 065 621**

(73) Patentinhaber: **BASF Aktiengesellschaft, Carl-Bosch-Strasse 38, D-6700 Ludwigshafen (DE)**

(72) Erfinder: **Schulz, Guenther, Dr., Wasgaustrasse 24, D-6700 Ludwigshafen (DE)**
Erfinder: **Wallbillich, Guenter,Dr., Eichendorffallee 15, D-6707 Schifferstadt (DE)**

**EP 0 129 902 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein verbessertes Verfahren zur Acylierung von Polyvinylalkoholen durch Veresterung der Polyvinylalkohole mit aktivierten Carbonsäurederivaten in Gegenwart von tertiären Aminen sowie photopolymerisierbare und/oder photovernetzbare Mischungen, die so acylierte Polyvinylalkohole enthalten.

Es ist bekannt, Polyvinylalkohole mit aktivierten Carbonsäurederivaten zu verestern (vgl. Houben-Weyl, Methoden der organischen Chemie, 4. Auflage, Band XIV/2, Seiten 725 bis 728, G. Thieme-Verlag, Stuttgart, 1963). In der GB-PS 834 337 und der DE-A 1 522 359 werden photopolymerisierbare bzw. photovernetzbare Mischungen von Polyvinylalkoholen mit Acryl- und Methacrylestergruppierungen beschrieben. Nach der DE-PS 10 65 621 werden Polyvinylalkohole mit Acryl- bzw. Methacrylsäureanhydrid so verestert, dass höchstens 2% der Hydroxylgruppen verestert sind, und die resultierenden Produkte zu Gelen polymerisiert. Probleme der Herstellung lichtempfindlicher löslicher Veresterungsprodukte der Polyvinylalkohole beschreibt die US-PS 3 560 465. In der DE-A-31 44 905 wird vorgeschlagen, für die Herstellung von verbesserten lichtempfindlichen Aufzeichnungsmaterialien zur Herstellung von Druck- und Reliefformen Polyvinylalkohol-Derivate zu verwenden, die durch Umsetzung von Polyvinylalkohol in heterogener Phase mit einem hohen molaren Überschuss an Acryl- bzw. Methacrylsäureanhydrid erhalten worden sind.

Die bisher bekannten Verfahren zur Acylierung von Polyvinylalkoholen sind jedoch alle mit zum Teil erheblichen Nachteilen belastet. So sind die Verfahren, die in homogener Phase in Lösung arbeiten, im allgemeinen von Nebenreaktionen begleitet und führen zu Produkten mit einem relativ grossen Anteil an Verunreinigungen. Die Verwendung von Pyridin, welches hierbei in den meisten Fällen als Suspendier- und Lösungsmittel zur Anwendung kommt, erfordert einen beachtlichen sicherheitstechnischen Aufwand zur Vermeidung unerwünschter Belästigungen. Die Acylierung von Polyvinylalkohol in heterogener Phase führt im allgemeinen zu niedrigen Ausbeuten und Acylierungsgraden und die Reproduzierbarkeit der Produkteigenschaften ist äusserst schwierig. Die in homogener oder auch heterogener Phase hergestellten Produkte besitzen häufig nicht die Eigenschaften, wie sie für den Einsatz in lichtempfindlichen, photopolymerisierbaren oder photovernetzbaren Gemischen wünschenswert sind, und sind daher für diesen Anwendungszweck vielfach in der Praxis nicht brauchbar. Arbeitet man zur Vermeidung dieser Nachteile in heterogener Phase mit einem hohen Überschuss an Acylierungsmittel, wie es in der DE-A-31 44 905 vorgeschlagen wird, so sind grosse Mengen an Ausgangsprodukten notwendig, die die Herstellung entsprechend verteuern.

Aufgabe der vorliegenden Erfindung war es daher, ein verbessertes Verfahren zur Acylierung von Polyvinylalkoholen aufzuzeigen, welches insbesondere einfach durchführbar ist, hohe Acylierungsgrade ermöglicht, hohe Ausbeuten bei der Acylierung liefert, dabei zu sauberen, sehr wenig verunreinigten Produkten führt und bezüglich der Produkteigenschaften sehr gut reproduzierbar durchzuführen ist. Aufgabe der Erfindung war es insbesondere auch, ein Verfahren zur Acylierung von Polyvinylalkoholen aufzuzeigen, welches zu Produkten führt, die mit Vorteil in lichtempfindlichen, photopolymerisierbaren oder photovernetzbaren Mischungen eingesetzt werden können, wie sie beispielsweise für die Herstellung von Überzügen, Druck- oder Reliefformen, Photoresists etc. verwendet werden.

Es wurde nun überraschenderweise gefunden, dass diese Aufgabe durch ein Verfahren zur Acylierung von Polyvinylalkoholen mit aktivierten Carbonsäurederivaten gelöst wird, bei dem die Veresterung in Gegenwart von bestimmten Aminopyridinen als Katalysator durchgeführt wird.

Gegenstand der Erfindung ist demzufolge ein Verfahren zur Acylierung von Polyvinylalkoholen durch Veresterung der Polyvinylalkohole mit aktivierten Carbonsäurederivaten in Gegenwart von tert.-Aminen, welches dadurch gekennzeichnet ist, dass man die Veresterung in Gegenwart von Pyridinderivaten der Formel (I)

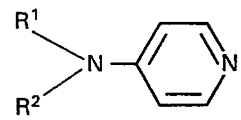
(I)

durchführt, wobei $R^1$ und $R^2$ jeweils Alkylreste oder $R^1$ und $R^2$ gemeinsam einen Alkylenrest darstellen.

Gegenstand der Erfindung sind weiterhin photopolymerisierbare und/oder photovernetzbare Mischungen, enthaltend acylierte Polyvinylalkohole, die nach diesem erfindungsgemässen Verfahren hergestellt sind.

Die Alkylaminopyridine sind wohl bereits als wirksame Acylierungskatalysatoren bei Veresterungsreaktionen von niedermolekularen Verbindungen bekannt (vgl. DE-A-19 58 954 und G. Höfle, W. Steglich und H. Vorbrüggen, Angewandte Chemie 90, [1978], Seiten 602 bis 615). Es stand für den Fachmann jedoch in keiner Weise zu erwarten, dass die Aminopyridine auch für die Veresterung von Polyvinylalkoholen mit grossem Vorteil als Katalysatoren eingesetzt werden können. Vielmehr musste man davon ausgehen, dass bei der in heterogener Phase ablaufenden Veresterungsreaktion hochmolekularer Polyvinylalkohole die Hydroxylgruppen der Polyvinylalkohole für das Acylierungsmittel aufgrund sterischer Hinderung und Diffusionshemmnisse schwer zugänglich sind und somit die Ursache für niedrige Acylierungsgrade, unbefriedigende Ausbeuten, schlechte Reproduzierbarkeit etc. in Reaktionshemmnissen liegt, die üblicherweise nicht durch Katalyse beseitigt werden können. Es hat sich aber überraschenderweise gezeigt, dass durch den erfindungsgemässen Einsatz der Aminopyridine als Katalysatoren bei der Veresterung von Polyvinylalkoholen einfach und leicht auch bei der Reaktion in heterogener Phase hohe Acylierungsgrade und hohe Ausbeuten bei der Acylierung erzielt werden können, wobei die eingesetzte Menge an Acylierungsmittel im Vergleich zu den bekannten Verfahren erheblich reduziert werden kann, störende Nebenreaktionen,

die zu Verunreinigungen der Produkte führen, weitgehend unterdrückt werden, ohne dass beispielsweise zuvor eine aufwendige Reinigung des Acylierungsmittels notwendig wäre, und acylierte Polyvinylalkohole mit reproduzierbaren, verbesserten Eigenschaften erhalten werden, die eine grosse Anwendungsbreite besitzen und sich insbesondere hervorragend für den Einsatz in lichtempfindlichen, photopolymerisierbaren und/oder photovernetzbaren Mischungen eignen.

Unter Polyvinylalkoholen werden im Rahmen dieser Erfindung ganz allgemein in Wasser lösliche oder zumindest dispergierbare Polymere mit wiederkehrenden $-CH_2CH(OH)-$Struktureinheiten in der Polymerhauptkette verstanden. Hierzu gehören Polyvinylalkohol selber, Copolymere aus Vinylalkohol- und anderen Comonomer-Einheiten sowie Derivate, z.B. Ether und/oder Ester, von Polyvinylalkoholen. Diesbezüglich sei auf den einschlägigen Stand der Technik verwiesen. Insbesondere kommen als Polyvinylalkohole die bekannten, teilverseiften Polyvinylester von Monocarbonsäuren mit 2 bis 4 Kohlenstoffatomen, vor allem die teilverseiften Polyvinylacetate oder Polyvinylpropionate, in Betracht. Der Verseifungsgrad der erfindungsgemäss einzusetzenden Polyvinylester liegt vorteilhafterweise über 75 Mol-%, vorzugsweise im Bereich von 80 bis 95 Mol.-%. Zu den Polyvinylalkoholen sind auch die modifizierten Polyvinylalkohole bzw. die modifizierten teilverseiften Polyvinylester zu rechnen, wie z.B. die Ethylenoxid-Einheiten enthaltenden Copolymeren von Polyvinylalkohol oder teilverseiftem Polyvinylacetat, wobei diese Copolymeren 10 bis 30 Gew.-%, bezogen auf das Copolymere, an chemisch gebundenen Ethylenoxideinheiten enthalten können. Der OH-Gruppengehalt dieser Copolymeren liegt vorzugsweise über 60 Mol.-%, bezogen auf das Copolymere. Das Molekulargewicht der in dem erfindungsgemässen Verfahren einzusetzenden Polyvinylalkohole kann in weiten Grenzen variiert werden und liegt vorzugsweise zwischen 15.000 und 100.000, insbesondere zwischen 20.000 und 50.000 (Zahlenmittel). Es können auch Gemische von verschiedenen Polyvinylalkoholen eingesetzt werden.

Als Acylierungsmittel können in dem erfindungsgemässen Verfahren alle für die Veresterung von Alkoholen an sich bekannten und üblichen aktivierten Carbonsäurederivate eingesetzt werden. Insbesondere kommen solche aktivierten Carbonsäurederivate in Betracht, die sich von Carbonsäuren mit 2 bis 12 C-Atomen ableiten. Bevorzugt werden als Acylierungsmittel die Carbonsäureanhydride verwendet. Die Carbonsäureanhydride können sich dabei von gesättigten oder ungesättigten, ein- oder mehrbasischen Carbonsäuren ableiten. Beispiele für gesättigte Carbonsäureanhydride sind Acetanhydrid, Propionsäureanhydrid und dergleichen, etwa für die Reacylierung von teilverseiften Polyvinylacetaten oder Polyvinylpropionaten. Bei Einsatz von Dicarbonsäureanhydriden, wie z.B. Bernsteinsäureanhydrid oder Phthalsäureanhydrid, werden Halbester der Dicarbonsäuren erhalten. Auf diese Weise können freie Carbonsäuregruppen in den Polyvinylalkohol eingeführt werden. Ausgehend von entsprechenden aktivierten Carbonsäurederivaten, können die Polyvinylalkohole auf diese Weise auch mit anderen funktionellen, reaktiven Gruppen modifiziert werden. Besonders bevorzugte aktivierte Carbonsäurederivate für das erfindungsgemässe Verfahren, insbesondere im Hinblick auf den Einsatz der resultierenden Produkte in lichtempfindlichen Mischungen, sind die aktivierten Derivate, insbesondere die Anhydride, von olefinisch ungesättigten Carbonsäuren mit 3 bis 10 C-Atomen. Hierzu gehören unter anderem die Derivate der Zimtsäure, Maleinsäure oder Fumarsäure. Mit besonderem Vorteil werden erfindungsgemäss für die Acylierung die Anhydride von $\alpha,\beta$-olefinisch ungesättigten Carbonsäuren mit 3 oder 4 C-Atomen verwendet. Hierbei sind insbesondere das Acrylsäureanhydrid und Methacrylsäureanhydrid, aber auch z.B. Crotonsäureanhydrid zu nennen.

Die Menge an eingesetztem Acylierungsmittel richtet sich nach dem gewünschten Acylierungsgrad, wobei der Acylierungsgrad im allgemeinen wiederum von dem gewünschten Anwendungszweck der erhaltenen Produkte abhängt und üblicherweise in weiten Grenzen variiert werden kann. Im allgemeinen wird man bei den teilverseiften Polyvinylestern mit hohen Verseifungsgraden die Reaktion auch zu höheren Acylierungsgraden führen, während bei Einsatz von niedrigverseiften Polyvinylestern der Acylierungsgrad niedriger liegen wird. In einer vorzugsweisen Ausführungsform des erfindungsgemässen Verfahrens werden die Polyvinylalkohole nur soweit acyliert, dass sie ihre Wasserlöslichkeit noch behalten. Beispielsweise wird bei Einsatz der bevorzugten olefinisch ungesättigten Carbonsäureanhydride das Verfahren vorteilhaft so geführt, dass der Acylierungsgrad der umgesetzten Polyvinylalkohole zwischen 1 und 12 Mol.-%, insbesondere zwischen 2 und 10 Mol.-%, liegt. Durch den erfindungsgemässen Einsatz der Aminopyridine als Katalysatoren ist es im Vergleich zu den bisher bekannten und üblichen Veresterungsverfahren für Polyvinylalkohole möglich, das erfindungsgemässe Verfahren so zu führen, dass höher acylierte, d.h. somit auch höher funktionalisierte Polyvinylalkohole entstehen, ohne dass die Wasserlöslichkeit der Produkte dadurch verloren geht. Ein weiterer Vorteil des erfindungsgemässen Verfahrens ist darin zu sehen, dass Verunreinigungen, die üblicherweise in den Acylierungsmitteln enthalten sind, die Veresterungsreaktion nicht stören und nur in untergeordnetem Masse zu unerwünschten Nebenreaktionen führen. Dadurch resultieren auch bei Einsatz der technisch erhältlichen Carbonsäurederivate in dem erfindungsgemässen Verfahren reine Produkte auch bei möglichen hohen Acylierungsgraden. Im Gegensatz zu dem aus der DE-A-31 44 905 bekannten Verfahren, nach dem die Acylierung der Polyvinylalkohole in heterogener Phase mit einem hohen molaren Überschuss des Acylierungsmittels erfolgen soll, kann das erfindungsgemässe Verfahren mit weitaus geringeren Mengen an Acylierungsmittel durchgeführt werden. Im allgemeinen wird das Acylierungsmittel erfindungsgemäss in solchen Mengen eingesetzt, die maximal der zweifach molaren Menge für den gewünschten Acylierungsgrad entsprechen. Vorzugsweise wird die Menge des Acylierungsmittels so bemessen, dass sie der 1,1- bis 1,5fachen molaren Menge entspricht, die für den gewünschten Umsetzungsgrad notwendig ist. Bezogen auf den eingesetzten Polyvinylalkohol können so beispielsweise 10 bis 100 Gew.-%, bevorzugt 15 bis 30 Gew.-%, an Acylierungsmittel eingesetzt werden.

Bei den erfindungsgemäss zu verwendeten Katalysatoren handelt es sich um Aminopyridine der allgemeinen Formel (I)

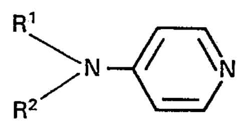

(I)

wobei die Reste $R^1$ und $R^2$ jeweils Alkylreste, insbesondere mit 1 bis 4 C-Atomen, oder $R^1$ und $R^2$ gemeinsam einen Alkylenrest, vorzugsweise mit 4 oder 5 C-Atomen, darstellen. Beispiele für bevorzugte Katalysatoren sind das p-Dimethylaminopyridin und das p-Pyrrolidinopyridin. Die Aminopyridine sowie ihre Herstellung sind an sich bekannt (vgl. Angewandte Chemie 90 [1978], 602, DE-A-1958954 und DE-A-2517774). Die Katalysatorkonzentration kann in weiten Grenzen variiert werden und liegt beispielsweise zwischen 0,1 bis 15 Gew.-%, vorzugsweise im Bereich von 0,5 bis 5 Gew.-%, an Aminopyridin, bezogen auf den eingesetzten Polyvinylalkohol.

Zusätzlich zu dem genannten Katalysator können in dem erfindungsgemässen Verfahren noch andere tertiäre Amine, wie beispielsweise Pyridin oder Triethylamin, als Hilfsbasen in einer Menge bis zu 50 Gew.-%, vorzugsweise zwischen 5 und 20 Gew.-%, bezogen auf den eingesetzten Polyvinylalkohol, mitverwendet werden. Die Menge an eingesetzter Hilfsbase richtet sich dabei unter anderem auch nach der Art des Acylierungsmittels. Im allgemeinen wird die Hilfsbase höchstens in solchen Mengen eingesetzt, die 50 bis 60 Mol.-% der stöchiometrischen Menge an gebildeter Säure nicht überschreiten. Ob eine Hilfsbase in dem erfindungsgemässen Verfahren mitverwendet wird, hängt auch von der Art der Reaktionsführung ab. Arbeitet man beispielsweise vorteilhaft in aromatischen Kohlenwasserstoffen, wie z.B. Toluol, als Lösungs- bzw. Dispergiermittel, so bringt ein Zusatz dieser Hilfsbasen keine nennenswerten Vorteile.

Auch wenn die Veresterungsreaktion des Polyvinylalkohols mit den Acylierungsmittel allein durchgeführt werden kann, wird vorzugsweise in Gegenwart eines Lösungs- oder Dispergiermittels gearbeitet. Besonders vorteilhaft findet die Umsetzung des Polyvinylalkohols mit dem Acylierungsmittel in heterogener Phase statt, indem man den Polyvinylalkohol in einem aprotischen Dispergiermittel aufschlämmt und in dieser Aufschlämmung in Gegenwart der Aminopyridine als Katalysator unter gleichzeitiger kräftiger Durchmischung mit dem Acylierungsmittel umsetzt. Als aprotische Dispergiermittel kommen insbesondere niedere halogenierte Kohlenwasserstoffe, niedere aliphatische Ketone und aliphatische, cycloaliphatische und/oder aromatische Kohlenwasserstoff-Lösungsmittel in Betracht. Als Beispiele für solche Dispergiermittel seien genannt: Methylenchlorid, Chloroform, Tetrachlorkohlenstoff, Trichlorethan; Aceton, Methylethylketon, Methylisobutylketon; Hexan, Cyclohexan und Benzinfraktionen. Sehr günstig sind Methylenchlorid und Aceton. Als besonders vorteilhaft haben sich die aromatischen Kohlenwasserstoff-Lösungsmittel, wie Benzol, Xylol und vorzugsweise Toluol, erwiesen. Es ist zweckmässig, solche Mengen an aprotischen Dispergiermitteln einzusetzen, dass in der Aufschlämmung aus Polyvinylalkohol und Dispergiermittel 30 bis 75 Gew.-%, insbesondere 40 bis 65 Gew.-%, an Dispergiermittel, bezogen auf die Summe von Polyvinylalkohol und Dispergiermittel, enthalten sind. Bei Einsatz von olefinisch ungesättigten aktivierten Carbonsäurederivaten als Acylierungsmittel hat es sich als zweckmässig erwiesen, die Acylierung des Polyvinylalkohols in Gegenwart von üblichen Polymerisationsinhibitoren, wie z.B. Di-tert.-butyl-p-kresol, durchzuführen.

Die Reaktionstemperatur liegt im allgemeinen im Bereich von 10 bis 100°C und wird vorzugsweise bei 40 bis 80°C gehalten. Die Reaktionszeit, die sich unter anderem auch nach dem gewünschten Acylierungsgrad richtet, liegt üblicherweise zwischen 2 und 40 Stunden und beträgt insbesondere 4 bis 30 Stunden.

Die Aufarbeitung und Isolierung des Reaktionsproduktes erfolgt in an sich bekannter und üblicher Art und Weise. Bei der Durchführung der Acylierungsreaktion in heterogener Phase braucht man das unlösliche Umsetzungsprodukt des Polyvinylalkohols lediglich abzufiltrieren, nachzuwaschen und zu trocknen. Somit gestaltet sich hier die Aufarbeitung sehr einfach und kostensparend, da ein Ausfällen des Polymeren, wie es z.B. bei der Umsetzung in Lösung erfolgen muss, und auch eine aufwendige Reinigung der Lösungsmittel vor der Wiederverwendung entfällt, ohne dass Reinheit und Qualität der Produkte nachteilig beeinflusst werden.

Das erfindungsgemässe Acylierungsverfahren von Polyvinylalkoholen eignet sich allgemein zur Einführung von beliebigen funktionellen Gruppen in den Polyvinylalkohol durch katalysierte Veresterung mit entsprechenden Säurederivaten. Damit ist eine gezielte, gut kontrollierbare Modifizierung der chemischen und physikalischen Eigenschaften der Polyvinylalkohole unter Bildung sehr reiner Produkte möglich. Das erfindungsgemässe Acylierungsverfahren lässt auch in mehreren, aufeinander folgenden Schritten die Einführung verschiedenartiger funktioneller Seitengruppen in die Polyvinylalkoholkette zu. Interessant ist es beispielsweise auch für analytische Zwecke als Verbesserung der Methode von R.L. Adelman und R.C. Ferguson, J. Polymer Sci., Polymer Chem. Ed., Vol. 13, 891 (1975). Da erfindungsgemäss Produkte konstanter, reproduzierbarer Qualität erhalten werden, die sich unter anderem selbst bei hohen Acylierungsgraden durch ihre Reinheit und einen besonders geringen Gehalt an absorbierenden Verunreinigungen auszeichnen, eignen sie sich mit grossem Vorteil für den Einsatz in photopolymerisierbaren und/oder photovernetzbaren Mischungen. Die Zusammensetzung solcher photopolymerisierbaren und/oder photovernetzbaren Gemische hängt von dem gewünschten Anwendungszweck als auch von der Art des eingesetzten, acylierten Polyvinylalkohols ab.

Sehr vorteilhaft sind solche photopolymerisierbaren und/oder photovernetzbaren Mischungen, die acylierte Polyvinylalkohole mit olefinisch ungesättigten, photopolymerisierbaren bzw. photovernetzbaren Estergruppen enthalten, wie sie z.B. bei der Umsetzung der Polyvinylalkohole mit aktivierten Derivaten von olefinisch ungesättigten Carbonsäuren, insbesondere Acrylsäureanhydrid, Methacrylsäureanhydrid oder Crotonsäureanhydrid, entstehen. Derartige Polyvinylalkohol-Derivate mit olefinisch ungesättigten photopolymerisierbaren bzw. photovernetzbaren Seitengruppen können neben einem geeigneten Photoinitiator sowie üblichen nichtpolymerisierbaren Zusatzstoffen die alleinige wesentliche Komponente der photopolymerisierbaren und/oder photovernetzbaren Mischungen darstellen. Zusätzlich können diese Mischungen aber auch weitere polymere Bindemittel, z.B. andere Polyvinylalkohole ohne olefinische Doppelbindungen, oder andere olefinisch ungesättigte, photopolymerisierbare, insbesondere niedermolekulare Verbindungen, wie z.B. die üblichen photopolymerisierbaren Monomeren und/oder Oligomeren, enthalten. Sind in den photopolymerisierbaren oder photovernetzbaren Mischungen auf Basis von acylierten Polyvinylalkoholen mit olefinisch ungesättigten, photopolymerisierbaren bzw. photovernetzbaren Seitengruppen weitere polymere Bindemittel und/oder weitere photopolymerisierbare, insbesondere niedermolekulare Verbindungen enthalten, so sollen — wie allgemein üblich — diese Bindemittel und photopolymerisierbaren Verbindungen mit dem acylierten Polyvinylalkohol verträglich sein.

Gemäss einer anderen Ausführungsform können die photopolymerisierbaren und/oder photovernetzbaren Mischungen solche acylierten Polyvinylalkohole enthalten, in welche durch das erfindungsgemässe Acylierungsverfahren andere funktionelle Gruppen eingeführt worden sind. Hierzu gehören beispielsweise die Polyvinylalkohole mit seitenständigen, freien Carboxylgruppen, wie sie bei der Acylierung von Polyvinylalkoholen mit aktivierten Derivaten von Dicarbonsäuren, insbesondere Dicarbonsäureanhydriden, entstehen. Die freien Carboxylgruppen in den Polyvinylalkoholen vermitteln beispielsweise eine verbesserte Haftung der photopolymerisierbaren und/oder photovernetzbaren Mischungen auf metallischen Untergründen. Derartige lichtempfindliche Mischungen eignen sich daher vorteilhaft als Überzugs-, Beschichtungs- oder Resistmaterialien, aber auch für Druckplatten, in denen die lichtempfindliche, reliefbildende Schicht beispielsweise auf einem Metall- oder Stahlträger aufgebracht ist. Photopolymerisierbare und/oder photovernetzbare Mischungen mit acylierten Polyvinylalkoholen mit funktionellen Gruppen, insbesondere freien Carboxylgruppen, können weitere, verträgliche polymere Bindemittel enthalten, beispielsweise andere, unmodifizierte Polyvinylalkohole, andere modifizierte Polyvinylalkohole und auch Polyvinylalkohole mit seitenständigen, olefinisch ungesättigten, photopolymerisierbaren bzw. photovernetzbaren Doppelbindungen; sie enthalten darüber hinaus im allgemeinen auch niedermolekulare, d.h. monomere oder oligomere, olefinisch ungesättigte, photopolymerisierbare Verbindungen. Auch in diesem Fall sollen die in der photopolymerisierbaren und/oder photovernetzbaren Mischung enthaltenen Polymeren und Monomeren bzw. Oligomeren weitgehend miteinander verträglich sein.

Als andere Polymerbindemittel, die neben den erfindungsgemäss acylierten Polyvinylalkoholen in den photopolymerisierbaren und/oder photovernetzbaren Mischungen enthalten sein können, kommen beispielsweise in Betracht: nichtmodifizierte Polyvinylalkohole, andere Polyvinylalkohol-Derivate, z.B. oxethylierte Polyvinylalkohole (vgl. z.B. US-PS 4 272 611), Polyvinylpyrrolidon, N-Vinylpyrrolidon-Copolymerisate, z.B. N-Vinylpyrrolidon/Vinylacetat-Copolymerisate, Cellulosederivate, Stärke, Stärkederivate oder Acrylsäurecopolymerisate. Ob und in welchen Mengen diese weiteren polymeren Bindemittel neben den erfindungsgemäss acylierten Polyvinylalkoholen mitverwendet werden, hängt von den angestrebten Eigenschaften und dem Verwendungszweck der photopolymerisierbaren und/oder photovernetzbaren Mischungen ab. Das Verhältnis kann daher in weiten Grenzen schwanken.

Als photopolymerisierbare, ethylenisch ungesättigte niedermolekulare Verbindungen, die in den photopolymerisierbaren und/oder photovernetzbaren Mischungen enthalten sein können, kommen die an sich bekannten Monomeren und/oder Oligomeren (mit einem Molekulargewicht bis zu 5.000, vorzugsweise bis zu 3.000) in Frage, die für lichtempfindliche Mischungen der in Rede stehenden Art üblich und gebräuchlich und beispielsweise in der eingangs zitierten Literatur beschrieben sind. Als Beispiele bevorzugter polymerisierbarer ethylenisch ungesättigter niedermolekularer Verbindungen, die eine oder auch mehrere ethylenisch ungesättigte Doppelbindungen enthalten können, seien solche mit Hydroxylgruppen, Amidgruppen und/oder Polyalkylenglykol-Struktureinheiten genannt. Hierzu gehören insbesondere Mono- und Polyacrylate und/oder -methacrylate von ein- oder mehrwertigen niedermolekularen Alkoholen, z.B. Hydroxyalkyl(meth)acrylat mit 1 bis 8 Kohlenstoffatomen im Alkylrest, wie z.B. β-Hydroxyethyl-(meth)acrylat, β-Hydroxypropyl-(meth)acrylat, Ethylenglykol-di(meth)acrylat, Mono- und Di-(meth)acrylate von Polyethylenglykolen oder Polypropylenglykolen mit Molekulargewichten bis ca. 500, Butandiol-1,4-di(meth)acrylat, 1,1,1-Trimethylolpropan-tri(meth)acrylat oder Glycerin-di- oder -tri-(meth)acrylat. Geeignet sind ferner niedermolekulare, präpolymere Urethanacrylate, wie sie z.B. durch Umsetzung von Hydroxyalkyl(meth)acrylaten (z.B. β-Hydroxyethyl-(meth)-acrylat, β-Hydroxypropyl-(meth)acrylat) organischen Diisocyanaten (z.B. Hexamethylendiisocyanat, Toluylendiisocyanat oder Isophorondiisocyanat) sowie gegebenenfalls niedermolekularen aliphatischen Diolen als Kettenverlängerern hergestellt werden können. Werden in den photopolymerisierbaren und/oder photovernetzbaren Mischungen ethylenisch ungesättigte niedermolekulare Verbindungen eingesetzt, so sind sie in den Mischungen im allgemeinen in solchen Mengen enthalten, dass ihr Anteil 10 bis 90 Gew.-%, vorzugsweise 30 bis 60 Gew.-%, bezogen auf die photopolymerisierbare und/oder photovernetzbare Mischung, beträgt.

Als Photopolymerisationsinitiatoren, die in den photopolymerisierbaren und/oder photovernetzbaren Mischungen im allgemeinen in Mengen von 0,001 bis 10 Gew.-%, vorzugsweise 0,1 bis 5 Gew.-%, bezogen auf die photopolymerisierbare und/oder photovernetzbare Mischung, enthalten sind, kommen die für lichtempfindliche Gemische üblichen und an sich bekannten Photoinitiatoren in Betracht, beispielsweise Acyloine und deren Derivate, wie Benzoin, Benzoinalkylether, α-Methylolbenzoin und dessen Ether, α-Methylbenzoin und dessen Ether; vicinale Diketone und deren Derivate, wie z.B. Benzilketale, insbesondere Benzildimethyketal; sowie besonders vorteilhaft Acylphosphinoxid-Verbindungen des Typs, wie sie z.B. in der DE-A-2909992 und der DE-A-3114341 beschrieben sind. Die photopolymerisierbaren und/oder photovernetzbaren Mischungen können darüber hinaus übliche Zusatz- und/oder Hilfsstoffe in üblichen Mengen enthalten. Hierzu gehören insbesondere thermische Polymerisationsinhibitoren, Farbstoffe, Pigmente, Weichmacher, Verarbeitungshilfsmittel etc.

Die erfindungsgemässen, photopolymerisierbaren und/oder photovernetzbaren Mischungen, die in üblicher Weise durch homogenes Vermischen der Bestandteile, beispielsweise in Lösung, hergestellt werden können, eignen sich vorteilhaft für die Herstellung von Überzügen, als Beschichtungsmaterialien, z.B. photopolymerisierbare Lacke, Farben und Spachtelmassen, zur Herstellung von Fluoreszenzschichten in Farbbildröhren, von reliefartig verzierten Überzügen, von Photoresists zur Herstellung von Elektronikbauteilen und gedruckten Schaltungen, zur Herstellung von Masken und Ätzresists zum Einsatz in der Formätztechnik sowie insbesondere auch zur Herstellung von lichtempfindlichen Aufzeichnungsmaterialien, insbesondere für photopolymerisierbare Druckplatte für den Hoch-, Tief-, Flach- oder Siebdruck. Bei der Verwendung der erfindungsgemässen photopolymerisierbaren und/oder photovernetzbaren Mischungen für die Herstellung von lichtempfindlichen Aufzeichnungsmaterialien werden die Bestandteile der Mischung vorteilhafterweise so aufeinander abgestimmt, dass die photopolymerisierbare und/oder photovernetzbare Mischung als solche wasserlöslich oder zumindest wasserdispergierbar ist, so dass die lichtempfindlichen Aufzeichnungsmaterialien nach einer bildmässigen Belichtung mit Wasser oder wässrigen Entwicklerlösungsmitteln ausgewaschen werden können. Ein besonderer Vorteil der erfindungsgemässen photopolymerisierbaren und/oder photovernetzbaren Mischungen ist auch darin zu sehen, dass sie trötz der Wasserauswaschbarkeit im unbelichteten Zustand nach der Photopolymerisation bzw. Photovernetzung eine erhöhte Wasserfestigkeit aufweisen.

Die Erfindung wird durch die nachfolgenden Beispiele näher erläutert. Die in den Beispielen genannten Teile und Prozente beziehen sich, sofern nicht anders angegeben, auf das Gewicht. Die Molekulargewichte der Polyvinylalkohole wurden bestimmt über die Viskositäten, gemessen als 4 gewichtsprozentige wässrige Lösung bei 20°C in einem Höppler-Viskosimeter, und sind als Zahlenmittel angegeben. Die Vergleichsversuche wurden so durchgeführt, dass die Konzentration des eingesetzten Polyvinylalkohols, bezogen auf die gesamte flüssige Phase, konstant gehalten wurde.

*Beispiel 1*

100 Teile eines teilverseiften Polyvinylacetats (Verseifungsgrad 82 Mol.-%, mittleres Molekulargewicht 20.000) wurden in einer Mischung aus 160 Teilen Aceton, 25 Teilen rohem Acrylsäureanhydrid, das ca. 5 Teile Acrylsäure enthielt, 15 Teilen Triethylamin, 1 Teil Di-tert.-butyl-p-kresol und 1 Teil p-Pyrrolidinopyridin dispergiert und 12 Stunden lang bei 60°C gerührt. Danach wurde das unlösliche Umsetzungsprodukt Des Polyvinylalkohols abfiltriert, mit Aceton gewaschen und getrocknet. Der erhaltene, acylierte Polyvinylalkohol enthielt 9 Mol.-% an Acrylester-Gruppen.

*Vergleichsversuch A*

Es wurde wie in Beispiel 1 gearbeitet, diesmal jedoch kein Triethylamin und kein p-Pyrrolidinopyridin mitverwendet, dafür jedoch die Menge an Aceton auf 170 Teile erhöht. Trotz einer Reaktionsdauer von 24 Stunden betrug der Gehalt an Acrylestergruppen in dem erhaltenen Umsetzungsprodukt nur 1,5 Mol.-%. Das eingesetztes Acrylsäureanhydrid war fast vollständig verbraucht.

*Beispiel 2*

100 Teile eines teilverseiften Polyvinylacetats (Verseifungsgrad 88 Mol.-%, mittleres Molekulargewicht 25.000) wurden in einer Mischung aus 160 Teilen Aceton, 25 Teilen rohem Methacrylsäureanhydrid, welches 7 Teile freie Methacrylsäure als Verunreinigung enthielt, 1 Teil Di-tert.-butyl-p-kresol, 15 Teilen Pyridin und 2 Teilen p-Dimethylaminopyridin dispergiert und 12 Stunden lang bei 60°C gerührt. Das nach Filtration, Waschen mit Aceton und Trocknen erhaltene Acylierungsprodukt des Polyvinylalkohols enthielt 7 Mol.-% Metacrylsäureestergruppen eingebaut.

*Vergleichsversuch B*

Es wurde wie in Beispiel 2 gearbeitet, diesmal jedoch auf die Mitverwendung des Pyridins und des p-Dimethylaminopyridins verzichtet, dafür jedoch die Menge an Methacrylsäureanhydrid von 25 auf 50 Teile erhöht. Die Menge des als Dispergiermittel eingesetzten Acetons betrug diesmal 140 Teile. Nach einer Reaktionszeit von 25 Stunden bei 60°C betrug der Gehalt an Methacrylsäureestergruppen in dem gewaschenen und getrockneten Umsetzungsprodukt nur 1,7 Mol.-%.

*Beispiel 3*

100 Teile eines teilverseiften Polyvinylacetats (Verseifungsgrad 88 Mol.-%, mittleres Molekulargewicht 50.000) wurden in 160 Teilen Aceton, 25 Teilen Crotonsäureanhydrid, welches 3 Teile freie Crotonsäure als Verunreinigung enthielt, 1 Teil Di-tert.--butyl-p-kresol, 10 Teilen Triethylamin und 1 Teil p-Dimethylaminopyridin dispergiert und 6 Stunden bei 60°C gerührt. Nach Abfiltrieren des Umsetzungsproduktes, Waschen und Trocknen wurde ein Gehalt an 11 Mol.-% gebundener Crotonsäureestergruppen in dem Polyvinylalkohol ermittelt. Das Umsetzungsprodukt war nach wie vor gut in Wasser löslich.

*Vergleichsversuch C*

Es wurde wie in Beispiel 3 gearbeitet, diesmal jedoch auf den Zusatz des p-Dimethylaminopyridins und des Triethylamins verzichtet, dafür jedoch der Anteil des Crotonsäureanhydrids von 25 Teilen auf 50 Teile (enthaltend 6 Teile freie Crotonsäure als Verunreinigung) erhöht. Nach einer Reaktionszeit von 20 Stunden bei 60°C betrug der Gehalt an gebundenen Crotonsäureestergruppen im Polyvinylalkohol nur 4,5 Mol.-%; das Produkt war nicht mehr in Wasser, sondern nur noch in einem Wasser/Methanol-Gemisch (1:1) löslich.

*Beispiel 4*

100 Teile eines teilverseiften Polyvinylacetats (Verseifungsgrad 88 Mol.-%, mittleres Molekulargewicht 16.000) wurden in einer Mischung aus 180 Teilen Toluol, 20 Teilen Methacrylsäureanhydrid (enthaltend 5,5 Teile freier Methacrylsäure als Verunreinigung), 1 Teil Di-tert.-Butyl-p-kresol und 1 Teil p-Dimethylaminopyridin dispergiert und 8 Stunden lang bei 80°C gerührt. Das unlösliche Reaktionsprodukt wurde abfiltriert, mit Toluol und Aceton gewaschen und getrocknet. Es enthielt in gebundener Form 5 Mol.-% Methacrylsäureestergruppen.

*Vergleichsversuch D*

Es wurde wie in Beispiel 1 gearbeitet, diesmal jedoch ohne Zusatz von p-Pyrrolidinopyridin, dafür wurde aber der Anteil des Triethylamins auf 16 Teile erhöht. Das resultierende Umsetzungsprodukt enthielt nur etwa 0,8 Mol.-% an Acrylsäureestergruppen eingebaut.

*Vergleichsversuch E*

Es wurde Beispiel 4 wiederholt, diesmal jedoch auf den Zusatz von p-Dimethylaminopyridin verzichtet. Dafür wurden jedoch 20 Teile Pyridin zugesetzt und die Menge an Toluol gleichzeitig von 180 Teilen auf 160 Teilen reduziert. Bei gleicher Reaktionszeit wie in Beispiel 4 hatte das erhaltene Acylierungsprodukt des Polyvinylalkohols nur 1,2 Mol.-% an Methacrylsäureestergruppen eingebaut.

*Beispiel 5*

100 Teile eines teilverseiften Polyvinylpropionats (Verseifungsgrad 88 Mol.-%, mittleres Molekulargewicht 30.000) wurden in einer Mischung aus 180 Teilen Toluol, 20 Teilen Bernsteinsäureanhydrid und 1 Teil p-Dimethylaminopyridin dispergiert und 8 Stunden lang bei 80°C gerührt. Das erhaltene Umsetzungsprodukt wurde abfiltriert, mit Aceton gewaschen und getrocknet. Es enthielt 9 Mol.-% an Bernsteinsäurehalbestergruppen eingebaut.

*Beispiel 6*

50 Teile des gemäss Beispiel 1 hergestellten acrylierten Polyvinylalkohols wurden bei 80°C in 50 Teilen Wasser gelöst und zu dieser Lösung 40 Teile β-Hydroxyethylacrylat, 8 Teile Trimethylolpropantriacrylat, 0,5 Teile 2,4,6-Trimethylbenzoyldiphenylphosphinoxid, 0,2 Teile Hydrochinonmonomethylether und 0,02 Teile Eosin gegeben. Die erhaltene Mischung wurde auf einem Träger zu einer etwa 0,8 mm dicken Schicht geformt und diese getrocknet. Durch Belichtung mit aktinischem Licht (360 nm) und Auswaschen der unbelichteten Bereiche der Schicht mit Wasser wurde ein Relief mit ausgezeichneter Schärfe und sehr guter Auswaschbeständigkeit auch feiner Reliefteile erhalten. Die photopolymerisierbare Schicht zeichnete sich durch hohe Lichtempfindlichkeit aus.

*Beispiel 7*

Es wurde wie in Beispiel 6 beschrieben gearbeitet, jedoch bestand die Mischung aus 70 Teilen des nach Beispiel 2 erhaltenen methacrylierten Polyvinylalkohols, 15 Teilen β-Hydroxyethylmethacrylat, 15 Teilen 1,4-Butandioldimethacrylat, 1,2 Teilen Benzildimethylketal, 0,1 Teilen Hydrochinon und 0,02 Teilen N-Nitrosophenylanilin. Die photopolymerisierbare Schicht hatte ähnlich gute Eigenschaften wie die in Beispiel 6 beschriebene.

*Beispiel 8*

Die Wiederholung von Beispiel 6 unter Einsatz des gemäss Beispiel 5 hergestellten acylierten Polyvinylalkohols ergab eine photopolymerisierbare Schicht, deren Auswaschverhalten sich über den pH-Wert des Auswaschmittels steuern liess.

**Patentansprüche**

1. Verfahren zur Acylierung von Polyvinylalkoholen durch Veresterung der Polyvinylalkohole mit aktivierten Carbonsäurederivaten in Gegenwart von tertiären Aminen, dadurch gekennzeichnet, dass man die Veresterung in Gegenwart von Pyridinderivaten der Formel (I)

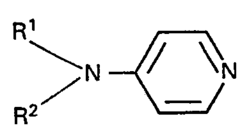

(I)

als Katalysator durchführt, wobei $R^1$ und $R^2$ jeweils Alkylreste oder $R^1$ und $R^2$ gemeinsam einen Alkylenrest darstellen.

2. Verfahren nach Anspruch 1, dadurch gekennzeichnet, dass als aktivierte Carbonsäurederivate Carbonsäureanhydride von Mono- oder Dicarbonsäuren verwendet werden.

3. Verfahren nach Anspruch 1 oder 2, dadurch gekennzeichnet, dass man als aktivierte Carbonsäurederivate aktivierte Derivate von olefinisch ungesättigten Carbonsäuren mit 3 bis 10 C-Atomen verwendet.

4. Verfahren nach Anspruch 3, dadurch gekennzeichnet, dass man als aktivierte Carbonsäurederivate Anhydride von olefinisch ungesättigten Carbonsäuren mit 3 oder 4 C-Atomen verwendet.

5. Verfahren nach einem der Ansprüche 1 bis 4, dadurch gekennzeichnet, dass man als Polyvinylalkohol ein verseiftes Polyvinylacetat verwendet, dessen Acetatgruppen zu mehr als 75 Mol.-% verseift sind.

6. Verfahren nach einem der Ansprüche 1 bis 5, dadurch gekennzeichnet, dass der Polyvinylalkohol auch Ethylenoxid-Einheiten eingebaut enthält.

7. Verfahren nach einem der Ansprüche 1 bis 6, dadurch gekennzeichnet, dass man als Katalysator p-Dimethylaminopyridin einsetzt.

8. Verfahren nach einem der Ansprüche 1 bis 6, dadurch gekennzeichnet, dass man als Katalysator p-Pyrrolidinopyridin einsetzt.

9. Verfahren nach einem der Ansprüche 1 bis 8, dadurch gekennzeichnet, dass man zusätzlich zu dem Katalysator andere tertiäre Amine, insbesondere Pyridin oder Triethylamin, zusetzt.

10. Verfahren nach einem der Ansprüche 1 bis 9, dadurch gekennzeichnet, dass die Veresterung in heterogener Phase durchgeführt wird.

11. Verfahren nach einem der Ansprüche 1 bis 10, dadurch gekennzeichnet, dass man die Veresterung bei Temperaturen im Bereich von 10 bis 100°C durchführt.

12. Photopolymerisierbare oder photovernetzbare Mischungen, enthaltend acylierte Polyvinylalkohole, die nach einem Verfahren gemäss Ansprüchen 1 bis 11 hergestellt sind.

## Claims

1. A process for the acylation of a polyvinyl alcohol by esterifying the polyvinyl alcohol with an activated carboxylic acid derivative in the presence of a tertiary amine, wherein the esterification is carried out in the presence of, as catalyst, a pyridin derivative of the formula (I)

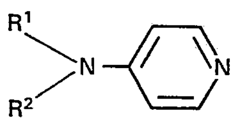
(I)

where $R^1$ and $R^2$ are each alkyl, or $R^1$ and $R^2$ together form an alkylene radical.

2. A process as claimed in claim 1, wherein the activated carboxylic acid derivative used is an anhydride of a monocarboxylic or dicarboxylic acid.

3. A process as claimed in claim 1 or 2, wherein the activated carboxylic acid derivative used is an activated derivative of an olefinically unsaturated carboxylic acid of 3 to 10 carbon atoms.

4. A process as claimed in claim 3, wherein the activated carboxylic acid derivative used is an anhydride of an olefinically unsaturated carboxylic acid of 3 or 4 carbon atoms.

5. A process as claimed in any of claims 1 to 4, wherein the polyvinyl alcohol used is a hydrolyzed polyvinyl acetate in which more than 75 mole % of the acetate groups are hydrolyzed.

6. A process as claimed in any of claims 1 to 5, wherein the polyvinyl alcohol also contains copolymerized ethylene oxide units.

7. A process as claimed in any of claims 1 to 6, wherein the catalyst used is p-dimethylaminopyridine.

8. A process as claimed in any of claims 1 to 6, wherein the catalyst used is p-pyrrolidinopyridine.

9. A process as claimed in any of claims 1 to 8, wherein another tertiary amine, especially pyridine or triethylamine, is used in addition to the catalyst.

10. A process as claimed in any of claims 1 to 9, wherein the esterification is carried out in the heterogeneous phase.

11. A process as claimed in any of claims 1 to 10, wherein the esterification is carried out at from 10 to 100°C.

12. A photopolymerizable or photocrosslinkable mixture which contains an acylated polyvinyl alcohol prepared by a process as claimed in claims 1 to 11.

## Revendications

1. Procédé d'acylation d'alcools polyvinyliques par estérification des alcools polyvinyliques avec des dérivés d'acides carboxyliques activés, en présence d'amines tertiaires, caractérisé par le fait que l'on effectue l'estérification en présence de dérivés de pyridine de formule (I)

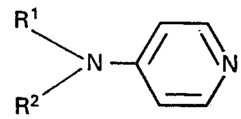
(I)

comme catalyseur, $R^1$ et $R^2$ représentant chacun des restes alkyle ou bien $R^1$ et $R^2$ représentant ensemble un reste alkylène.

2. Procédé selon la revendication 1, caractérisé par le fait que l'on utilise, comme dérivés d'acides carboxyliques activés, des anhydrides d'acides mono- ou dicarboxyliques.

3. Procédé selon la revendication 1 ou 2, caractérisé par le fait que l'on utilise, comme dérivés d'acides carboxyliques activés, des dérivés d'acides carboxyliques ayant 3 à 10 atomes C et insaturés oléfiniquement.

4. Procédé selon la revendication 3, caractérisé par le fait que l'on utilise, comme dérivés d'acides carboxyliques activés, des anhydrides d'acides carboxyliques, insaturés oléfiniquement et ayant 3 ou 4 atomes C.

5. Procédé selon l'une des revendications 1 à 4, caractérisé par le fait que l'on utilise, comme alcool polyvinylique, un polyacétate de vinyle saponifié, dont les groupes acétate sont saponifiés à plus de 75 moles %.

6. Procédé selon l'une des revendications 1 à 5, caractérisé par le fait que l'alcool polyvinylique contient aussi, incorporés, des motifs oxyde d'éthylène.

7. Procédé selon l'une des revendications 1 à 6, caractérisé par le fait que l'on emploie, comme catalyseur, de la p-diméthylaminopyridine.

8. Procédé selon l'une des revendications 1 à 6, caractérisé par le fait que l'on emploie, comme catalyseur, de la p-pyrrolidinopyridine.

9. Procédé selon l'une des revendications 1 à 8,

caractérisé par le fait qu'en plus du catalyseur, on ajoute d'autres amines tertiaires, en particulier de la pyridine ou de la triéthylamine.

10. Procédé selon l'une des revendications 1 à 9, caractérisé par le fait que l'estérification est effectuée en phase hétérogène.

11. Procédé selon l'une des revendications 1 à 10, caractérisé par le fait que l'estérification est effectuée à des températures comprises dans les limites de 10 à 100°C.

12. Mélanges photopolymérisables ou photoréticulables, contenant des alcools polyvinyliques acylés, qui sont préparés par un procédé selon les revendications 1 à 11.